# EUROPÄISCHE PATENTSCHRIFT

(11) **EP 1 678 871 B1**
(45) Veröffentlichungstag und Bekanntmachung des Hinweises auf die Patenterteilung: **17.12.2008**
(21) Anmeldenummer: 04791351.2
(22) Anmeldetag: 29.10.2004
(51) Int. Cl.: H04L 12/14, H04L 29/06

(54) **VERFAHREN ZUR ÜBERTRAGUNG VON DATEN**
METHOD FOR TRANSFERRING DATA
PROCEDE DE TRANSMISSION DE DONNEES

(30) Priorität: 31.10.2003 DE 10350894
(43) Veröffentlichungstag der Anmeldung: 12.07.2006
(73) Patentinhaber: Nokia Siemens Networks GmbH & Co. KG, 81541 München (DE)
(72) Erfinder: MAURER, Uwe, 82194 Gröbenzell (DE); SIMON, Daniel, 80689 München (DE); KISSLING, Christian, 83451 Piding (DE); HUTTER, Andreas, 81673 München (DE); ILLGNER-FEHNS, Klaus, 81549 München (DE); WAGNER, Marcel, 80335 München (DE)
(86) Internationale Anmeldenummer: PCT/EP2004/052732
(87) Internationale Veröffentlichungsnummer: WO 2005/043812

(56) Entgegenhaltungen:
- WO-A-03/055220
- US-A1- 2002 065 864
- US-A1- 2003 120 773
- US-B1- 6 449 588

## Beschreibung

Die Erfindung betrifft ein Verfahren zur Übertragung von Daten zwischen einem ersten Rechner und einem zweiten Rechner sowie ein entsprechendes Datennetz und ein entsprechendes Computerprogramm-Erzeugnis.

Sowohl das Internet als auch drahtlose Zugangsnetzwerke, wie UMTS und WLAN, dienen heutzutage zur Übertragung einer Vielzahl von Daten. Insbesondere werden diese Netze immer mehr zur Übertragung von Multimedia-Daten, beispielsweise in Form von Video-Streaming, eingesetzt. Dabei treten häufig Qualitätsprobleme auf. Diese Qualitätsprobleme resultieren daher, dass Multimediaströme über verschiedene Netze von einem Server zu einem Client transportiert werden, weshalb es nahezu unmöglich ist, eine durchgehend hohe und gleichbleibende Qualität der Datenübertragung zu garantieren. Ein Kunde, dem von einem Provider ein Multimediastrom bereitgestellt wird (beispielsweise bei Video on Demand oder Internet-Radio), bekommt somit nicht immer eine optimale Präsentation der Multimediainhalte. Sofern der Provider die Bereitstellung der Multimediainhalte dem Kunden in Rechnung stellt, ist eine Bezahlung für die schlechte Qualität für den Kunden oft nicht akzeptabel.

Heutzutage werden Multimediainhalte gegenüber dem Kunden in Bezug auf das übertragene Datenvolumen abgerechnet. Technisch wird dies dadurch realisiert, dass bei der Anforderung eines Multimediastroms mit einem sog. Session Management Protokoll einer Streaming Session aufgebaut wird. Der Auf- und Abbau einer Session wird in Logdateien und Datenbanken gespeichert. Eine Abrechnung für den Kunden wird dadurch erzeugt, dass die Logdateien bzw. Datenbanken nach entsprechenden Auf- und Abbau der Sitzung durchsucht werden und hieraus die übertragene Datenmenge extrahiert wird. Es erweist sich hierbei als nachteilig, dass der Kunde unabhängig von der Qualität des Multimediastroms immer den vollen Preis für die Datenübertragung zahlt.

Aus der US 2003/0120773 A1 ist ein Verfahren bzw. ein System zur Überwachung der Dienstgüte einer Verbindung in einem paketorientierten Netzwerk bekannt, bei dem Messdaten über die Dienstgüte durch einen Endpunkt der Verbindung innerhalb eines vorgebbaren Zeitintervall gesammelt werden. Die Messdaten werden dann zu einer spezifisch für Verbindungen mit dem Endpunkt zuständigen Registrierungseinheit zur Weiterverarbeitung übermittelt.

Aus der WO 03/055220 A1 ist ein System bzw. Verfahren zur automatischen Qualitätserfassung von Signale, die durch eingebettete Daten erfolgt, bekannt, wobei die Qualitätserfassung als ein Parameter für ein Vergebührungssystem genutzt wird.

Aus US 6,449,588 B1 ist ein Customer Quality of Service Management System für ein hybrides Netzwerk bekannt. Das System registriert und sammelt Ereignisse, die Vorgänge in dem Netzwerk betreffen, u.a. QoS-Vereinbarungen, Nutzer-Anfragen oder Daten über die Netzwerk-Performance. Aus Ereignissen wird ermittelt, ob ein Report erstellt werden soll und welcher. Ein Beispiel für solch einen Report ist ein Planungsreport.

Aus der US 2002/0065864 A1 ist ein System bzw. ein Verfahren bekannt, differenzierte Services für Netzwerke bereitzustellen, bspw. Premium- und nicht-Premium-Inhalte mit einem Management der Ressourcen, die für diese Services nötig sind, wie z.B. Netzwerk-Bandbreite.

Aufgabe der Erfindung ist es deshalb, ein Verfahren zur Übertragung von Daten zu schaffen, welches eine verbesserte Abrechnung von Übertragungskapazitäten gegenüber einem Kunden ermöglicht.

Diese Aufgabe wird durch die unabhängigen Patentansprüche gelöst. Weiterbildungen der Erfindung sind in den abhängigen Ansprüchen definiert.

In dem erfindungsgemäßen Verfahren werden Daten zwischen einem ersten Rechner und einem zweiten Rechner übertragen, wobei während der Übertragung qualitätsreduzierende Ereignisse, welche zu einer Verschlechterung der Qualität der übertragenen Daten führen, erfasst werden. Diese qualitätsreduzierenden Ereignisse werden protokolliert.

Der Erfindung liegt somit die Erkenntnis zugrunde, dass Ereignisse, welche für einen Verwender der übertragenen Daten eine wahrnehmbare Qualitätsverschlechterung darstellen, detektiert werden können und für einen Provider wichtige Informationen darstellen.

In einer besonders bevorzugten Ausführungsform wird das erfindungsgemäße Verfahren zur Übertragung von digitalisierten Videobildern (auch Video-Streaming genannt) eingesetzt, wobei in diesem Falle folgende qualitätsreduzierenden Ereignisse erfasst werden:
- Einfrieren von Videobildern;
- Artefakte in Videobildern;
- Verminderung der Schärfe von Videobildern.

Die Erfinder haben hierbei erkannt, dass es bei den heutzutage verwendeten Übertragungsverfahren problemlos möglich ist, die oben genannten, für einen Benutzer als sehr störend empfundenen Ereignisse technisch zu ermitteln.

In einer besonders bevorzugten Ausführungsform werden in Abhängigkeit von den protokollierten qualitätsreduzierenden Ereignissen die von einem Benutzer für die Datenübertragung zu entrichtenden Kosten berechnet. Hierdurch wird einem Provider die Möglichkeit geschaffen, ein transparentes und an der Qualität der Daten orientiertes Abrechnungsmodell für den Kunden bereitzustellen. Die Abhängigkeit der abzurechnenden Kosten von der Datenqualität ist hierbei jedoch nur ein Beispiel einer Abrechnungspolitik. z.B. könnte auch die Möglichkeit bestehen, eine schlechte Qualität an andere Faktoren, wie z.B. Prämien oder ein Sonderkündigungsrecht für den Benutzer, zu koppeln.

In einer besonders bevorzugten Ausführungsform des erfindungsgemäßen Verfahrens ist der erste Rechner ein Server und der zweite Rechner ein Client. Unter einem Server wird ein Rechner verstanden, der Daten bereitstellt, die von einem Client, beispielsweise einem Endgerät wie Laptop oder Handy, empfangen werden. Dabei wird im Client wenigstens ein Teil der qualitätsreduzierenden Ereignisse erfasst und an dem Server mittels einer Rückmeldungs-Nachricht gemeldet. Die Erfassung der qualitätsreduzierenden Ereignisse erfolgt somit in dem Mediaplayer bzw. Decoder im Client, was technisch kein Problem darstellt. In einer bevorzugten Variante werden in der Rückmeldungs-Nachricht Quantifizierungsmaße übermittelt, durch welche das jeweilige qualitätsreduzierende Ereignis kategorisiert und/oder spezifiziert wird. Das qualitätsreduzierende Ereignis kann insbesondere bei der Videoübertragung einer der drei oben genannten Ereigniskategorien zugeordnet werden.

In einer weiteren Ausführungsform wird bei der Datenübertragung das hinlänglich aus dem Stand der Technik bekannte RTP/- RTCP-Protokoll (RTP = Real Time Protocol; RTCP = Real Time Control Protocol, siehe Dokument [1]) eingesetzt und die Rückmeldungs-Nachricht wird im RTCP-Protokoll übermittelt. Die Rückmeldungs-Nachricht umfasst vorzugsweise eine oder mehrere Bits, insbesondere ein Byte.

In einer weiteren Variante des erfindungsgemäßen Verfahrens ist der erste Rechner wiederum ein Server und der zweite Rechner wiederum ein Client, wobei jedoch wenigstens ein Teil der qualitätsreduzierenden Ereignisse im Server erfasst werden. Dies hat den Vorteil, dass die Erfassung der Ereignisse vom Client abgekoppelt ist, so dass ein etwaiger Missbrauch durch Manipulation am Client nicht möglich ist. Ein solcher Missbrauch könnte das Versenden von manipulierten Rückmeldungs-Nachrichten sein, welche dem Server suggerieren, dass ein qualitätsreduzierendes Ereignis aufgetreten ist, was jedoch tatsächlich nicht der Fall ist. Hierdurch könnte ein Benutzer versuchen, den Preis für eine Datenübertragung zu vermindern.

Eine Möglichkeit der Erfassung von qualitätsreduzierenden Ereignissen beim Server besteht darin, dass vom Server die gesendete Datenrate detektiert wird und die am Client empfangene Datenrate vom Client detektiert und an den Server gemeldet wird. Der Server stellt dann ein qualitätsreduzierendes Ereignis fest, wenn der Unterschied zwischen empfangener und gesendeter Datenrate einen vorbestimmten Wert überschreitet. Eine andere Möglichkeit zur Erfassung der qualitätsreduzierenden Ereignisse beim Server besteht darin, dass Datenverluste vom Client detektiert und an den Server gemeldet werden. Der Server stellt dann ein qualitätsreduzierendes Ereignis fest, wenn der Unterschied zwischen empfangener und gesendeter Datenrate einen vorbestimmten Wert überschreitet. Eine andere Möglichkeit zur Erfassung der qualitätsreduzierenden Ereignisse beim Server besteht darin, dass Datenverluste vom Client detektiert und an den Server gemeldet werden, wobei der Server in Abhängigkeit von der Größe der Datenverluste das Auftreten eines qualitätsreduzierenden Ereignisses erfasst. In einer bevorzugten Variante wird dabei wiederum das RTP/RTCP-Protokoll eingesetzt, und die vom Client detektierte empfangene Datenrate und/oder die vom Client detektierten Datenverluste werden im RTCP-Protokoll übermittelt. Somit können bekannte Protokolle zur Realisierung des erfindungsgemäßen Verfahrens eingesetzt werden.

Eine weitere Möglichkeit zur Erfassung von qualitätsreduzierenden Ereignissen beim Server erfolgt über den Datenpuffer im Client. Hierbei ist die Größe des Puffers dem Server bekannt bzw. wird sie dem Server beim Aufbau einer Übertragungssitzung mitgeteilt. Der Server wird dann bei Datenverlusten vom Client darüber informiert, welche Daten verlorengegangen sind, wobei der Server daraus den Füllstand des Puffers berechnet und dadurch das Auftreten von qualitätsreduzierenden Ereignissen ermittelt. Die Information, welche Daten bei Datenverlusten verloren gegangen sind, wird vorzugsweise über eine Erweiterung im RTCP-Protokoll dem Server mitgeteilt.

Das oben genannte Verfahren wird insbesondere bei Datenübertragungen eingesetzt, welche Daten in Form von Datenpaketen übermitteln, wie es beispielsweise beim IP-Protokoll (IP = Internet Protocol) der Fall ist.

In einer weiteren Ausführungsform der Erfindung wird die Erfassung der qualitätsreduzierenden Ereignisse beim Server und die Erfassung der qualitätsreduzierenden Ereignisse beim Client kombiniert, so dass qualitätsreduzierende Ereignisse sowohl beim Server als auch beim Client erfasst werden. Es wird dabei ein Vergleich zwischen den beiden qualitätsreduzierenden Ereignissen durchgeführt, wobei nur solche Ereignisse protokolliert werden, die sowohl vom Server als auch vom Client erfasst wurden. Es wird somit eine Plausibilitätsprüfung nachgeschaltet, um dadurch etwaige fälschlich detektierte qualitätsreduzierenden Ereignisse herauszufiltern.

Neben dem oben beschriebenen Datenübertragungsverfahren betrifft die Erfindung ferner ein Datennetz mit wenigstens einem ersten und wenigstens einem zweiten Rechner, wobei das Datennetz derart ausgestaltet ist, dass zwischen dem ersten und dem zweiten Rechner Daten gemäß dem erfindungsgemäßen Übertragungsverfahren übermittelt werden. Vorzugsweise umfasst dieses Datennetz ein IP-Netz und/oder ein UMTS-Netz und/oder ein WLAN-Netz.

Darüber hinaus umfasst die Erfindung ein ComputerprogrammErzeugnis, welches ein Speichermedium aufweist, auf welchem ein Computerprogramm gespeichert ist, mit dem das erfindungsgemäße Datenübertragungsverfahren durchgeführt wird, wenn das Computerprogramm auf einem Rechner abläuft.

Ausführungsbeispiele der Erfindung werden nachfolgend anhand der beigefügten Figuren beschrieben.

Es zeigen:
- Figur 1: eine schematische Darstellung des erfindungsgemäßen Datenübertragungsverfahrens;
- Figur 2: eine schematische Darstellung einer Rückmeldungs- Nachricht, die in einer Ausführungsform des erfin- dungsgemäßen Verfahrens verwendet wird; und
- Figur 3: eine Prozessoreinheit zur Durchführung des erfin- dungsgemäßen Verfahrens.

Im Folgenden wird die Erfindung im Zusammenhang mit Video-Streaming beschrieben, bei dem ein aus einer Vielzahl von videobildern bestehender Videofilm von einem Server auf einem Client heruntergeladen und dort von einem Benutzer betrachtet wird. Beim Video-Streaming konnten experimentell drei verschiedene Klassen von qualitätsreduzierenden Ereignissen ermittelt werden, wobei diese Ereignisse dem Betrachter des Videofilms negativ auffallen und damit zur Reduktion der subjektiven Qualität der Multimediadaten führen. Es handelt sich um folgende drei Ereignisse:
1. Einfrieren des Bildes: Bei diesem Ereignis bleibt das Bild eine Zeit lang stehen.
2. Artefakte im Videobild: Bei diesem Ereignis erscheinen Teile des Videobildes verfremdet oder verschmiert.
3. Qualitätsreduktion in der Bitrate: Bei diesem Ereignis ist die Schärfe des Videobildes und die Schärfe der Bewegungen im Videobild vermindert.

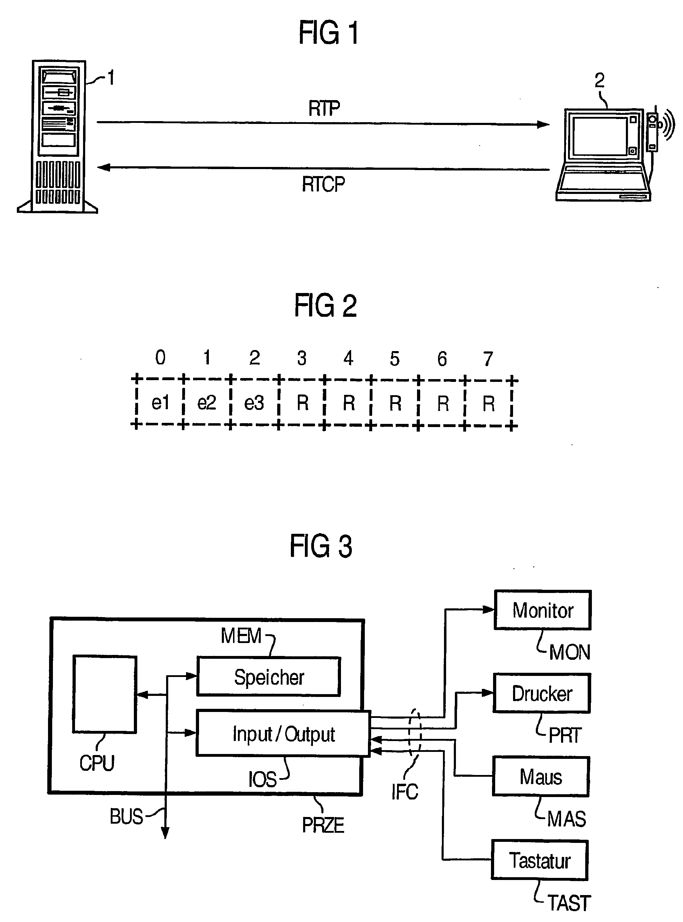

In Figur 1 ist ein Szenario dargestellt, bei dem das erfindungsgemäße Verfahren zur Anwendung kommt. Figur 1 zeigt einen Server 1 und einen Client 2, wobei der Server Video-Streaming-Daten zur Verfügung stellt, die zum Client übertragen werden. Hierbei wird u.a. das IP-Protokoll zur Datenübertragung genutzt. Darüber hinaus wird in der hier beschriebenen Ausführungsform das sog. RTP-Protokoll eingesetzt, das hinlänglich aus dem Stand der Technik bekannt ist (siehe Druckschrift [1]). Dieses Protokoll umfasst ferner das RTCP-Protokoll, mit dem sog. Feedback-Nachrichten zur Überwachung der Datenübertragung von dem Client an den Server zurückgesendet werden.

Durch das erfindungsgemäße Verfahren wird es ermöglicht, dass der Server über die drei oben genannten qualitätsreduzierenden Ereignisse informiert wird und diese Ereignisse protokolliert. In einer ersten Ausführungsform erfolgt dies dadurch, dass die Ereignisse beim Client erkannt und an den Server berichtet werden. Voraussetzung ist hierfür, dass der Client die Ereignisse detektieren kann. Dies ist üblicherweise kein Problem, da der Client zur Anzeige der Videodaten einen Player bzw. Decoder umfasst, der die drei oben genannten qualitätsreduzierenden Ereignisse erkennt. Zur Rückmeldung dieser Ereignisse wird in der ersten Ausführungsform das RTCP-Protokoll verwendet, welches ein spezielles Erweiterungs-Byte umfasst, das in Figur 2 schematisch dargestellt ist.

Figur 2 zeigt das Erweiterungs-Byte mit den Bitpositionen 0 bis 7. Die ersten drei Bitpositionen 0 bis 2 beschreiben die entsprechenden qualitätsreduzierenden Ereignisse, wobei e1 für das oben genannte erste Ereignis , e2 für das oben genannte zweite Ereignis und e3 für das oben genannte dritte Ereignis steht. Nach der Detektion eines qualitätsreduzierenden Ereignisses durch den Client setzt dieser das entsprechende Bit 0, 1 bzw. 2 auf den Wert 1. Hierdurch wird mitgeteilt, welches qualitätsreduzierende Ereignis vorliegt. Die übrigen, in Figur 2 als R bezeichneten Bitfelder sind für weitere qualitätsreduzierende Ereignisse vorgesehen bzw. können zur zusätzlichen Quantifizierung dieser Ereignisse genutzt werden. Beispielsweise könnte mit diesen Bits signalisiert werden, wie lange das Einfrieren eines Bildes andauert bzw. wie groß die Anzahl der auftretenden Artefakte im Videobild ist.

Ein Nachteil dieser ersten Ausführungsform des erfindungsgemäßen Verfahrens besteht darin, dass der Client unter Umständen missbräuchlich das Auftreten von qualitätsreduzierenden Ereignissen an den Server meldet. Beispielsweise könnte der Client durch den Benutzer manipuliert werden, so dass dem Server suggeriert wird, dass eine schlechte Bildqualität vorliegt. Dies kommt insbesondere dann in Betracht, wenn beim Auftreten von qualitätsreduzierenden Ereignissen das zu zahlende Entgeld für die Datenübertragung entsprechend reduziert wird. Dieser Nachteil kann gemäß einer zweiten Ausführungsform des erfindungsgemäßen Verfahrens umgangen werden. Bei dieser zweiten Ausführungsform schließt der Server auf ein qualitätsreduzierendes Ereignis nur aufgrund der regulären RTCP-Nachricht, die nicht um das oben beschriebene Byte erweitert ist. Dies ist möglich, da bereits in der regulären RTCP-Nachricht Informationen zur Datenübertragung enthalten sind, mit denen der Server auf qualitätsreduzierende Ereignisse schließen kann. Bei dieser Ausführungsform ist die Möglichkeit des Missbrauchs durch einen Benutzer stark eingeschränkt, da die Qualität der Verbindung heruntergeregelt wird, wenn die reguläre RTCP-Nachricht eine ständig schlechter werdende Qualität berichtet. Da ein Benutzer an einer Verschlechterung der Qualität kein Interesse hat, kommt eine missbräuchliche Verwendung durch eine Manipulation der RTCP-Nachricht nicht in Betracht.

Die einzelnen qualitätsreduzierenden Ereignisse können beim Server wie folgt detektiert werden:

Das Ereignis "Qualitätsreduktion in der Bitrate" ist auf Serverseite leicht zu detektieren, da dem Server die gesendete Bitrate bekannt ist. Der Client erfährt die gesendete Bitrate durch eine RTCP-Nachricht des Servers. Überschreitet somit die Differenz aus gesendeter und erwarteter Bitrate einen vorbestimmten Wert, liegt ein qualitätsreduzierendes Ereignis vor.

Das Ereignis "Artefakte im Bild" ist nicht so einfach zu detektieren. Diesem Ereignis geht in der Regel ein Datenpaketverlust voraus. Datenpaketverluste können dem Server wiederum über das RTCP-Protokoll mitgeteilt werden. Ob ein Paketverlust jedoch zu einem qualitätsreduzierenden Ereignis durch Artefakte im Bild führt, hängt stark von dem verwendeten Client ab. Bei der Auswertung eines qualitätsreduzierenden Ereignisses muss der Server folglich wissen, welcher Client vorliegt. Diese Information kann dem Server beispielsweise dadurch zur Verfügung gestellt werden, dass für jeden Client ein Schwellenwert T ermittelt wird. Dieser Schwellenwert sagt aus, dass ein qualitätsreduzierendes Ereignis in der Form von Artefakten beim Client auftritt, wenn der Paketverlust größer als T ist. Der entsprechende Wert T muss im vorhinein durch Experimente ermittelt werden. Somit wird das qualitätsreduzierende Ereignis "Artefakte im Bild" immer dann detektiert, wenn der beim Client festgestellte Datenpaketverlust einen vom Client abhängigen Schwellenwert T überschreitet.

Das qualitätsreduzierende Ereignis "Einfrieren des Videobildes" tritt im Allgemeinen dann auf, wenn der im Client vorhandene Puffer für die Videobilder unterläuft, d.h. nahezu leer ist. Zur Detektion dieses Ereignisses teilt der Client dem Server beim Aufbau der Datenverbindung zunächst mit, wie groß sein Puffer ist und wie voll der Puffer sein muss, damit bei ihm Multimediainhalte angezeigt werden. Bei der Datenübertragung erfährt der Server ferner über eine Erweiterung im RTCP-Protokoll, welche Pakete verloren gehen sowie den Zeitstempel der ankommenden Pakete. Hieraus ermittelt der Server problemlos den Pufferstand. Tritt nun der Fall auf, dass der Pufferfüllstand unterhalb des Wertes liegt, ab dem Multimediadaten angezeigt werden, tritt ein Einfrieren des Videobildes auf. Detektiert der Server einen solchen Pufferunterlauf, protokolliert er diesen als qualitätsreduzierendes Ereignis.

In einer dritten Ausführungsform des erfindungsgemäßen Verfahrens werden die erste und die zweite Ausführungsform kombiniert. D.h. die qualitätsreduzierenden Ereignisse werden sowohl vom Client als auch vom Server detektiert. Der Server vergleicht dann beide Detektionen. Sofern keine Diskrepanzen auftreten, werden die detektierten Ereignisse als qualitätsreduzierende Ereignisse protokolliert. Sollte jedoch beispielsweise vom Client ein qualitätsreduzierendes Ereignis detektiert werden, das der Server nicht erfasst, liegt mit hoher Wahrscheinlichkeit ein Missbrauch vor, so dass der Server dieses Ereignis nicht protokolliert.

Das oben beschriebene Erfassen und Protokollieren der qualitätsreduzierenden Ereignisse wird in einer bevorzugten Ausführungsform der Erfindung zur Berechnung der Gebühren für die Datenübertragung herangezogen. Hierdurch soll es ermöglicht werden, dass der Preis für die Datenübertragung auch von der Qualität der Daten abhängig gemacht wird. Somit muss beispielsweise der Betrachter von Multimedia-Daten weniger zahlen, wenn die Qualität unbefriedigend ist. Hierbei hängt es von dem Provider ab, wie er seine Abrechnung gegenüber dem Kunden an die qualitätsreduzierenden Ereignisse koppelt. Beispielsweise kann der Provider beim Auftreten einer schlechten Qualität über einen längeren Zeitraum dem Kunden Geld zurückerstatten. Vorstellbar ist hierbei, dass dem Kunden bei schlechter Qualität ein reduzierter Preis in Rechnung gestellt wird oder dass der Kunde überhaupt nichts bezahlen muss.

Die oben beschriebenen Ausführungsformen betreffen die Übertragung von Multimedia-Daten in Form von Video-Streaming, jedoch ist es für den Fachmann ersichtlich, dass die obige Erfindung auch für die Übertragung anderer Daten angewendet werden kann. Ein weiteres Anwendungsgebiet ist beispielsweise die Telefonie in einem IP-Netz, welche häufig als "Voice over IP" bezeichnet wird. Hierbei kann von einem Mobilfunkprovider in seiner Abrechnung die Sprachqualität einbezogen werden.

Der große Vorteil der oben beschriebenen Kopplung der qualitätsreduzierenden Ereignisse an Abrechnungspreise liegt darin, dass ein Provider dem Kunden einen fairen Abrechnungsmodus bereitstellen kann, wodurch er sich gegenüber anderen Wettbewerbern einen Vorteil verschafft.

In Fig. 3 ist eine Prozessoreinheit PRZE zur Durchführung des erfindungsgemäßen Verfahrens dargestellt. Die Prozessoreinheit PRZE umfasst einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner. Literaturverzeichnis:
[1] H. Schulzrinne, S. Casner, R. Frederick, and V. Jacobson, "RTP: A transport protocol for real-time applications", RFC 1889, IETF, February 1996.

## Patentansprüche

1. Verfahren zur Übertragung von Daten zwischen einem ersten Rechner (1) und einem zweiten Rechner (2), bei dem:
- qualitätsreduzierende Ereignisse, welche zu einer Verschlechterung der Qualität der übertragenen Daten führen, erfasst werden;
- die qualitätsreduzierenden Ereignisse protokolliert werden;
- **dadurch gekennzeichnet, dass**
- der erste Rechner (1) ein Server und der zweite Rechner (2) ein Client ist;
- im Client wenigstens ein Teil der qualitätsreduzierenden Ereignisse erfasst wird und an den Server mittels einer Rückmeldungs-Nachricht gemeldet wird; und
- im Server wenigstens ein Teil der qualitätsreduzierenden Ereignisse erfasst wird.

2. Verfahren nach Anspruch 1, bei dem digitalisierte Videobilder übertragen werden und die folgenden qualitätsreduzierenden Ereignisse erfasst werden:
- Einfrieren von Videobildern;
- Artefakte in Videobildern;
- Verminderung der Schärfe von Videobildern.

3. Verfahren nach Anspruch 1 oder 2, bei dem in Abhängigkeit von den protokollierten qualitätsreduzierenden Ereignissen die von einem Benutzer für die Datenübertragung zu entrichtenden Kosten berechnet werden.

4. Verfahren nach einem der vorangehenden Ansprüche, bei dem in der Rückmeldungs-Nachricht Quantifizierungsmaße übermittelt werden, durch welche das jeweilige qualitätsreduzierende Ereignis kategorisiert und/oder spezifiziert wird.

5. Verfahren nach einem der vorangehenden Ansprüche, bei dem das RTP/RTCP-Protokoll, RTP = Real Time Protocol; RTCP = Real Time Control Protocol, eingesetzt wird und die Rückmeldungs-Nachricht im RTCP-Protokoll übermittelt wird.

6. Verfahren nach einem der vorangehenden Ansprüche, bei dem die Rückmeldungs-Nachricht eine oder mehrere Bits, umfasst.

7. Verfahren nach Anspruch 6, bei dem die Rückmeldungs-Nachricht ein Byte umfasst.

8. Verfahren nach einem der vorangehenden Ansprüche, bei dem die gesendete Datenrate vom Server detektiert wird und die am Client empfangene Datenrate vom Client detektiert und an den Server gemeldet wird, wobei der Server ein qualitätsreduzierendes Ereignis detektiert, wenn der Unterschied zwischen empfangener und gesendeter Datenrate einen vorbestimmten Wert überschreitet.

9. Verfahren nach einem der vorangehenden Ansprüche, bei dem vom Client Datenverluste detektiert und an den Server gemeldet werden, wobei der Server in Abhängigkeit von der Größe der Datenverluste das Auftreten eines qualitätsreduzierenden Ereignisses erfasst.

10. Verfahren nach Anspruch 8 oder 9, bei dem das RTP/RTCP-Protokoll, RTP = Real Time Protocol; RTCP = Real Time Control Protocol, eingesetzt wird und die vom Client detektierte empfangene Datenrate und/oder die vom Client detektierten Datenverluste im RTCP-Protokoll übermittelt werden.

11. Verfahren nach Anspruch 9 oder 10, bei dem der Client einen Puffer aufweist, dessen Größe dem Server bekannt ist, wobei der Server bei Datenverlusten vom Client informiert wird, welche Daten verloren gegangen sind, woraus der Server den Füllstand der Puffers berechnet und **dadurch** das Auftreten von qualitätsreduzierenden Ereignissen ermittelt.

12. Verfahren nach Anspruch 11, bei dem das RTP/RTCP-Protokoll, RTP = Real Time Protocol; RTCP = Real Time Control Protocol, eingesetzt wird und die Information, welche Daten bei Datenverlusten verloren gegangen sind, über eine Erweiterung im RTCP-Protokoll an den Server übermittelt wird.

13. Verfahren nach einem der vorangehenden Ansprüche, wobei die im Server erfassten und die im Client erfassten qualitätsreduzierenden Ereignisse verglichen werden und nur diejenigen qualitätsreduzierenden Ereignisse protokolliert werden, die sowohl von Server als auch vom Client erfasst wurden.

14. Verfahren nach einem der vorhergehenden Ansprüche, bei dem die Daten in Form von Datenpaketen, insbesondere über das IP-Protokoll, IP = Internet Protocol, übermittelt werden.

15. Datennetz, umfassend wenigstens einen ersten und wenigstens einen zweiten Rechner, wobei das Datennetz derart ausgestaltet ist, dass zwischen dem ersten und zweiten Rechner Daten gemäß einem Verfahren nach einem der vorhergehenden Ansprüche übertragbar sind.

16. Datennetz nach Anspruch 15, wobei das Datennetz ein IP-Netz, IP = Internet Protocol, und/oder ein UMTS-Netz, UMTS = Universal Mobile Telecommunications System, und/oder ein WLAN-Netz, WLAN = Wireless Local Area Network, umfasst.

17. Computerprogrammerzeugnis, welches ein Speichermedium aufweist, auf welchem ein Computerprogramm gespeichert ist, mit dem ein Verfahren nach einem der Ansprüche 1 bis 14 durchgeführt wird, wenn das Computerprogramm auf einem Rechner abläuft.

## Claims

1. Method for transmitting data between a first computer (1) and a second computer (2), in which:
- quality-reducing events which result in an impairment of the quality of the transmitted data are sensed;
- the quality-reducing events are logged;
**characterized in that**
- the first computer (1) is a server and the second computer (2) is a client;
- the client senses at least some of the quality-reducing events and reports them to the server using an acknowledgment message; and
- the server senses at least some of the quality-reducing events.

2. Method according to Claim 1, in which digitized video images are transmitted and the following quality-reducing events are sensed:
- freezing of video frames;
- artefacts in video frames;
- reduction in the definition of video frames.

3. Method according to Claim 1 or 2, in which the logged quality-reducing events are taken as a basis for calculating the costs to be paid by a user for the data transmission.

4. Method according to one of the preceding claims, in which the acknowledgement message is used to transmit measures of quantification which categorize and/or specify the respective quality-reducing event.

5. Method according to one of the preceding claims, in which the RTP/RTCP protocol, RTP = Real Time Protocol, RTCP = Real Time Control Protocol, is used and the acknowledgement message is transmitted in the RTCP protocol.

6. Method according to one of the preceding claims, in which the acknowledgement message comprises one or more bits.

7. Method according to Claim 6, in which the acknowledgement message comprises one byte.

8. Method according to one of the preceding claims, in which the transmitted data rate is detected by the server and the data rate received on the client is detected by the client and is reported to the server, wherein the server detects a quality-reducing event if the difference between the received and transmitted data rates exceeds a predetermined value.

9. Method according to one of the preceding claims, in which the client detects data losses and reports them to the server, wherein the server takes the magnitude of the data losses as a basis for sensing the occurrence of a quality-reducing event.

10. Method according to Claim 8 or 9, in which the RTP/RTCP protocol, RTP = Real Time Protocol, RTCP = Real Time Control Protocol, is used and the received data rate detected by the client and/or the data losses detected by the client are transmitted in the RTCP protocol.

11. Method according to Claim 9 or 10, in which the client has a buffer, the size of which is known to the server, wherein in the event of data losses the server is informed by the client of which data have been lost, and the server uses this information to calculate the filling level of the buffer and thereby ascertains that quality-reducing events have occurred.

12. Method according to Claim 11, in which the RTP/RTCP protocol, RTP = Real Time Protocol, RTCP = Real Time Control Protocol, is used and the information regarding which data have been lost in the event of data losses is transmitted to the server using an extension in the RTCP protocol.

13. Method according to one of the preceding claims, wherein the quality-reducing events sensed in the server and the quality-reducing events sensed in the client are compared, and only those quality-reducing events which have been sensed both by the server and by the client are logged.

14. Method according to one of the preceding claims, in which the data are transmitted in the form of data packets, particularly using the IP protocol, IP = Internet Protocol.

15. Data network, comprising at least one first and at least one second computer, wherein the data network is in a form such that data can be transmitted between the first and second computers in line with a method according to one of the preceding claims.

16. Data network according to Claim 15, wherein the data network comprises an IP network, IP = Internet Protocol, and/or a UMTS network, UMTS = Universal Mobile Telecommunications System, and/or a WLAN network, WLAN = Wireless Local Area Network.

17. Computer program product which has a storage medium which stores a computer program which is used to carry out a method according to one of Claims 1 to 14 when the computer program is running on a computer.

## Revendications

1. Procédé de transmission de données entre un premier ordinateur (1) et un second ordinateur (2), dans lequel :
- des événements réduisant la qualité, lesquels entraînent une dégradation de la qualité des données transmises, sont enregistrés ;
- les événements réduisant la qualité étant consignés ;
- **caractérisé en ce que**
- le premier ordinateur (1) est un serveur et **en ce que** le second ordinateur (2) est un client ;
- **en ce qu'**au moins une partie des événements réduisant la qualité est enregistrée dans le client et signalée au serveur au moyen d'un message d'information en retour ;
et
- **en ce qu'**au moins une partie des événements réduisant la qualité est enregistrée dans le serveur.

2. Procédé selon la revendication 1, dans lequel des images vidéo numérisées sont transmises et dans lequel les événements suivants réduisant la qualité sont enregistrés :
- gel d'images vidéo ;
- artéfacts dans des images vidéo;
- diminution de la netteté d'images vidéo.

3. Procédé selon la revendication 1 ou 2, dans lequel les coûts à payer par un utilisateur pour la transmission de données sont calculés en fonction des événements consignés réduisant la qualité.

4. Procédé selon l'une quelconque des revendications précédentes, dans lequel des mesures de quantification sont transmises dans le message d'information en retour, au moyen desquelles l'événement respectif réduisant la qualité est catégorisé et/ou spécifié.

5. Procédé selon l'une quelconque des revendications précédentes, dans lequel le protocole RTP/RTCP, RTP = Real Time Protocol ; RTCP = Real Time Control Protocol, est utilisé et dans lequel le message d'information en retour est transmis dans le protocole RTCP.

6. Procédé selon l'une quelconque des revendications précédentes, dans lequel le message d'information en retour comprend un ou plusieurs bits.

7. Procédé selon la revendication 6, dans lequel le message d'information en retour comprend un octet.

8. Procédé selon l'une quelconque des revendications précédentes, dans lequel le débit de données émis est détecté par le serveur et le débit de données reçu sur le client est détecté par le client et signalé au serveur, le serveur détectant un événement réduisant la qualité lorsque la différence entre le débit de données reçu et le débit de donnés émis dépasse une valeur prédéterminée.

9. Procédé selon l'une quelconque des revendications précédentes, dans lequel des pertes de données sont détectées par le client et signalées au serveur, le serveur enregistrant l'apparition d'un événement réduisant la qualité en fonction de la taille des pertes de données.

10. Procédé selon la revendication 8 ou 9, dans lequel le protocole RTP/RTCP, RTP = Real Time Protocol ; RTCP = Real Time Control Protocol, est utilisé et dans lequel le débit de données reçu détecté par le client et/ou les pertes de données détectées par le client sont transmis dans le protocole RTCP.

11. Procédé selon la revendication 9 ou 10, dans lequel le client présente une mémoire tampon, dont la taille est connue du serveur, le serveur, en cas de pertes de données, étant informé par le client sur les données qui ont été perdues, sur quoi le serveur calcule le niveau de remplissage de la mémoire tampon et détecte ainsi l'apparition d'événements réduisant la qualité.

12. Procédé selon la revendication 11, dans lequel le protocole RTP/RTCP, RTP = Real Time Protocol ; RTCP = Real Time Control Protocol, est utilisé et dans lequel l'information indiquant quelles données ont été perdues lors de pertes de données est transmise au serveur par l'intermédiaire d'une extension dans le protocole RTCP.

13. Procédé selon l'une quelconque des revendications précédentes, les événements réduisant la qualité enregistrés dans le serveur et les événements réduisant la qualité enregistrés dans le client étant comparés et seuls les événements réduisant la qualité, qui ont été enregistrés aussi bien par le serveur que par le client, étant consignés.

14. Procédé selon l'une quelconque des revendications précédentes, dans lequel les données sont transmises sous forme de paquets de données, notamment par l'intermédiaire du protocole IP, IP = Internet Protocol.

15. Réseau de données comprenant au moins un premier ordinateur et au moins un second ordinateur, le réseau de données étant conçu de manière à ce que des données soient transmissibles entre le premier et le second ordinateurs selon un procédé selon l'une quelconque des revendications précédentes.

16. Réseau de données selon la revendication 15, le réseau de données comprenant un réseau IP, IP = Internet Protocol, et/ou un réseau UMTS, UMTS = Universal Mobile Telecommunications System, et/ou un réseau WLAN, WLAN = Wireless Local Area Network.

17. Produit de programme d'ordinateur, lequel présente un support de mémoire, sur lequel est mémorisé un programme d'ordinateur, au moyen duquel un procédé selon l'une quelconque des revendications 1 à 14 est réalisé lorsque le programme d'ordinateur se déroule sur un ordinateur.
